# EUROPEAN PATENT SPECIFICATION

(11) **EP 3 879 902 B1**
(45) Date of publication and mention of the grant of the patent: **11.10.2023**
(21) Application number: 19908336.1
(22) Date of filing: 08.01.2019
(51) Int. Cl.: H04W 72/04, H04L 5/00, H04W 74/00

(54) **COMMUNICATION METHOD OF FREQUENCY DIVISION DUPLEX SYSTEM, RELATED DEVICE AND SYSTEM**
KOMMUNIKATIONSVERFAHREN FÜR EIN FREQUENZDUPLEXSYSTEM, ZUGEHÖRIGE VORRICHTUNG UND SYSTEM
PROCÉDÉ DE COMMUNICATION D'UN SYSTÈME DE DUPLEXAGE PAR RÉPARTITION EN FRÉQUENCE, DISPOSITIF ET SYSTÈME ASSOCIÉS

(43) Date of publication of application: 15.09.2021
(73) Proprietor: Huawei Technologies Co., Ltd., Longgang District Shenzhen, Guangdong 518129 (CN)
(72) Inventor: WANG, Yuchen, Shenzhen, Guangdong 518129 (CN); YU, Haifeng, Shenzhen, Guangdong 518129 (CN); WU, Yiling, Shenzhen, Guangdong 518129 (CN)
(74) Representative: Pfenning, Meinig & Partner mbB
(86) International application number: PCT/CN2019/070916
(87) International publication number: WO 2020/142912

(56) References cited:
- US-A1- 2018 234 971

## Description

### TECHNICAL FIELD

This application relates to the field of communications technologies, and in particular, to communication methods in a frequency division duplex system, a terminal device, a network device, and a computer non-transient storage medium.

### BACKGROUND

A basic task of a wireless communications system is to establish and maintain a communications link between a transmission node and a reception node, to implement bidirectional transmission of communication data. A conventional duplex mode is mainly classified into time division duplex (time division duplex, TDD) and frequency division duplex (frequency division duplex, FDD).

In a conventional time division duplex system, uplink transmission and downlink transmission are performed in different slots, and an uplink data channel and a downlink data channel are time-orthogonal. In a data frame (or a data subframe), a channel is divided into several slots, and each activated slot is an uplink slot or a downlink slot. In a conventional frequency division duplex system, uplink transmission and downlink transmission are performed in different frequency bands, and an uplink data channel and a downlink data channel are frequency-orthogonal. An uplink data frame and a downlink data frame are respectively sent in an uplink frequency band and a downlink frequency band simultaneously.

Currently, a frame structure designed for a TDD system has a plurality of uplink/downlink resource allocation ratios (for example, uplink/downlink resources each occupy 50% of total resources, or all resources are uplink resources or downlink resources). However, spectrums of power wireless networks are complex, and different countries or regions have different regulations and requirements. To reduce research and development costs, a same set of protocol stacks or device needs to be reused. In other words, a frame structure designed for TDD is used in an FDD system. However, if the frame structure designed for TDD is directly used in a paired spectrum (for example, an FDD spectrum), a waste of system resources is caused. For example, for a frame structure in which uplink/downlink resources each occupy 50% of total resources, about 50% of the system resources are wasted.

Currently, a problem that needs to be resolved urgently is how to design a frame structure used in a paired spectrum, so that a waste of system resources can be reduced and a same terminal device can be reused in an original system.

US 2018/234971 A1 discloses a terminal device that uses a broad band to improve a throughput.

### SUMMARY

The invention is set out in the appended set of claims. The invention relates to communication methods in frequency division duplex (claims 1 and 6), a terminal device (claim 12), a network device (claim 13) and a computer non transient storage medium (claim 14).

According to a first aspect, a communication method in a frequency division duplex system is provided. The method includes: A first terminal device receives first dedicated signaling sent by a network device, and obtains a first configuration message. The first terminal device sends, based on the first configuration message, first information to the network device by using a second transmission frame structure, and receives second information that is sent by the network device by using the second transmission frame structure. The second transmission frame structure has a first fixed delay relative to a first transmission frame structure, and the first transmission frame structure is a frame structure that is used by a second terminal device to send third information to the network device and that is used by the network device to send fourth information to the second terminal device.

According to the foregoing method, the first terminal device performs configuration based on a configuration message sent by the network device, to obtain the second transmission frame structure having the first fixed delay, and sends information to the network device by using the second transmission frame structure or receives information that is sent by the network device by using the second transmission frame structure. In this way, radio resources in the system can be fully utilized, load on different time-frequency resources can be balanced, and a same terminal device can be reused, thereby reducing research and development costs.

In a possible implementation, the first information includes first data, first control signaling, and/or a first signal; and the second information includes second data, second control signaling, and/or a second signal.

In another possible implementation, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

According to the foregoing method, the second transmission frame structure having the first fixed delay is used to send or receive data or information when a system message obtaining process and a random access process are not performed, thereby effectively reducing a system common resource proportion, and further avoiding a waste of resources.

In another possible implementation, a value of the first fixed delay is less than a transmission time interval TTI of the frequency division duplex system.

According to the foregoing method, for a frame structure in which both an uplink resource and a downlink resource exist, a waste of system resources can be minimized, and the radio resources in the system can be effectively utilized.

In another possible implementation, the first terminal device sends the third information to the network device by using the first transmission frame structure and receives the fourth information that is sent by the network device by using the first transmission frame structure.

The third information includes third data, third control signaling, and/or a third signal, the third data is data used in a random access process, the third control signaling is control signaling used in a random access process, and the third signal is a physical signal corresponding to a physical channel that carries the third data and/or the third control signaling.

The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

According to the foregoing method, an existing frame structure (namely, the first transmission frame structure) is used when the system message obtaining process or the random access process is performed, so that the first terminal device can reuse the existing system message obtaining process and the existing random access process, thereby effectively reducing the system common resource proportion, further avoiding the waste of resources, and reducing the research and development costs.

In another possible implementation, the first dedicated signaling includes at least one of the following messages: a radio resource control RRC establishment message, an RRC reestablishment message, an RRC reconfiguration message, or an RRC resume message.

According to the foregoing method, the first terminal device receives the radio resource control RRC establishment message, the RRC reestablishment message, the RRC reconfiguration message, or the RRC resume message, obtains the first configuration message from the RRC establishment message, the RRC reestablishment message, the RRC reconfiguration message, or the RRC resume message, and performs configuration to obtain the second transmission frame structure. In this way, resource overheads are reduced, and no additional resource needs to be allocated for the first configuration message, thereby simplifying a procedure and improving efficiency.

According to a second aspect, a communication method in a frequency division duplex system is provided. The method includes: A network device sends first dedicated signaling to a first terminal device, where the first dedicated signaling carries a first configuration message. The network device receives first information that is sent by the first terminal device based on the first configuration message by using a second transmission frame structure, and sends second information to the first terminal device by using the second transmission frame structure. The second transmission frame structure has a first fixed delay relative to a first transmission frame structure, and the first transmission frame structure is a frame structure that is used by a second terminal device to send third information to the network device and that is used by the network device to send fourth information to the second terminal device.

According to the foregoing method, the network device sends the first configuration message to the first terminal device, so that the first terminal device performs configuration to obtain the second transmission frame structure, and the network device sends information to the first terminal device by using the second transmission frame structure or receives information that is sent by the first terminal device by using the second transmission frame structure. In this way, radio resources in the system can be fully utilized, load on different time-frequency resources can be balanced, and a same terminal device can be reused, thereby reducing research and development costs.

In a possible implementation, the first information includes first data, first control signaling, and/or a first signal; and the second information includes second data, second control signaling, and/or a second signal.

In another possible implementation, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

According to the foregoing method, the second transmission frame structure having the first fixed delay is used to send or receive data or information when a system message obtaining process and a random access process are not performed, thereby effectively reducing a system common resource proportion, and further avoiding a waste of resources.

In another possible implementation, a value of the first fixed delay is less than a transmission time interval TTI of the frequency division duplex system.

According to the foregoing method, for a frame structure in which both an uplink resource and a downlink resource exist, a waste of system resources can be minimized, and the radio resources in the system can be effectively utilized.

In another possible implementation, the network device receives the third information that is sent by the first terminal device by using the first transmission frame structure, and sends the fourth information to the first terminal device by using the first transmission frame structure.

The third information includes third data, third control signaling, and/or a third signal, the third data is data used in a random access process, the third control signaling is control signaling used in a random access process, and the third signal is a physical signal corresponding to a physical channel that carries the third data and/or the third control signaling. The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

According to the foregoing method, an existing frame structure (namely, the first transmission frame structure) is used when the system message obtaining process or the random access process is performed, so that the first terminal device can reuse the existing system message obtaining process and the existing random access process, thereby effectively reducing the system common resource proportion, further avoiding the waste of resources, and reducing the research and development costs.

In another possible implementation, after sending the first dedicated signaling to the first terminal device, the network device send a common reference signal CRS to the first terminal device by using the second transmission frame structure.

In another possible implementation, the network device sends second dedicated signaling to a third terminal device, where the second dedicated signaling carries a second configuration message. The network device receives fifth information that is sent by the third terminal device based on the second configuration message by using a third transmission frame structure, and sends sixth information to the third terminal device by using the third transmission frame structure. The third transmission frame structure has a second fixed delay relative to the first transmission frame structure, and a value of the second fixed delay is different from the value of the first fixed delay.

According to the foregoing method, in a system having different uplink/downlink resource allocation ratios, the network device may configure different delays for the terminal device, to obtain different frame structures, so that radio resources on a spectrum can be more effectively utilized, thereby avoiding a waste.

In another possible implementation, the first dedicated signaling and/or the second dedicated signaling include/includes at least one of the following messages: a radio resource control RRC establishment message, an RRC reestablishment message, an RRC reconfiguration message, or an RRC resume message.

According to the foregoing method, the network device sends the radio resource control RRC establishment message, the RRC reestablishment message, the RRC reconfiguration message, or the RRC resume message to the first terminal device, so that the first terminal device obtains the first configuration message from the RRC establishment message, the RRC reestablishment message, the RRC reconfiguration message, or the RRC resume message, and performs configuration to obtain the second transmission frame structure. In this way, resource overheads are reduced, and no additional resource needs to be allocated for the first configuration message, thereby simplifying a procedure and improving efficiency.

According to a third aspect, a first terminal device is provided. The first terminal device includes:
a receiving unit, configured to: receive a first dedicated instruction sent by a network device, and obtain a first configuration message; and
a sending unit, configured to send, based on the first configuration message, first information to the network device by using a second transmission frame structure.

The receiving unit is further configured to receive second information that is sent by the network device by using the second transmission frame structure.

The second transmission frame structure has a first fixed delay relative to a first transmission frame structure, and the first transmission frame structure is a frame structure that is used by a second terminal device to send third information to the network device and that is used by the network device to send fourth information to the second terminal device.

In a possible implementation, the first information includes first data, first control signaling, and/or a first signal; and the second information includes second data, second control signaling, and/or a second signal.

In another possible implementation, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

In another possible implementation, a value of the first fixed delay is less than a TTI.

In another possible implementation, the sending unit is further configured to send the third information to the network device by using the first transmission frame structure.

The receiving unit is further configured to receive the fourth information that is sent by the network device by using the first transmission frame structure.

The third information includes third data, third control signaling, and/or a third signal, the third data is data used in a random access process, the third control signaling is control signaling used in a random access process, and the third signal is a physical signal corresponding to a physical channel that carries the third data and/or the third control signaling.

The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

In another possible implementation, the first dedicated signaling includes at least one of the following messages: a radio resource control RRC establishment message, an RRC reestablishment message, an RRC reconfiguration message, or an RRC resume message.

According to a fourth aspect, a network device is provided. The network device includes:
a sending unit, configured to send first dedicated signaling to a first terminal device, where the first dedicated signaling carries a first configuration message; and
a receiving unit, configured to receive first information that is sent by the first terminal device based on the first configuration message by using a second transmission frame structure.

The sending unit is further configured to send second information to the first device by using the second transmission frame structure.

The second transmission frame structure has a first fixed delay relative to a first transmission frame structure, and the first transmission frame structure is a frame structure that is used by a second terminal device to send third information to the network device and that is used by the network device to send fourth information to the second terminal device.

In a possible implementation, the first information includes first data, first control signaling, and/or a first signal; and the second information includes second data, second control signaling, and/or a second signal.

In another possible implementation, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

In another possible implementation, a value of the first fixed delay is less than a TTI.

In another possible implementation, the receiving unit is further configured to receive the third information that is sent by the first terminal device by using the first transmission frame structure.

The sending unit is further configured to send the fourth information to the first terminal device by using the first transmission frame structure.

The third information includes third data, third control signaling, and/or a third signal, the third data is data used in a random access process, the third control signaling is control signaling used in a random access process, and the third signal is a physical signal corresponding to a physical channel that carries the third data and/or the third control signaling.

The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

In another possible implementation, the sending unit is further configured to send a common reference signal CRS to the first terminal device by using the second transmission frame structure.

In another possible implementation, the sending unit is further configured to send second dedicated signaling to a third terminal device, where the second dedicated signaling carries a second configuration message.

The receiving unit is further configured to receive fifth information that is sent by the third terminal device based on the second configuration message by using a third transmission frame structure.

The sending unit is further configured to send sixth information to the third terminal device by using the third transmission frame structure.

The third transmission frame structure has a second fixed delay relative to the first transmission frame structure, and a value of the second fixed delay is different from the value of the first fixed delay.

In another possible implementation, the first dedicated signaling and/or the second dedicated signaling include/includes at least one of the following messages: a radio resource control RRC establishment message, an RRC reestablishment message, an RRC reconfiguration message, or an RRC resume message.

According to a fifth aspect, a first terminal device is provided. The first terminal device includes a processor, a memory, and a transceiver.

The processor, the memory, and the transceiver are connected to each other. The memory is configured to store a computer program. The computer program includes program instructions. The processor is configured to invoke the program instructions to perform the method according to any one of the first aspect.

According to a sixth aspect, a network device is provided. The network device includes a processor, a memory, and a transceiver.

The processor, the memory, and the transceiver are connected to each other. The memory is configured to store a computer program. The computer program includes program instructions. The processor is configured to invoke the program instructions to perform the method according to any one of the second aspect.

According to a seventh aspect, a computer non-transient storage medium is provided. The computer non-transient storage medium includes instructions. When the instructions are run on a terminal device, the terminal device is enabled to perform the method according to any one of the first aspect.

According to a non-claimed eighth aspect, a computer non-transient storage medium is provided. The computer non-transient storage medium includes instructions. When the instructions are run on a network device, the network device is enabled to perform the method according to any one of the second aspect.

According to a ninth aspect, a communications system is provided. The communications system includes a terminal device and a network device. The terminal device and the network device may communicate with each other.

The terminal device is configured to perform the method according to any one of the first aspect.

The network device is configured to perform the method according to any one of the second aspect.

### BRIEF DESCRIPTION OF DRAWINGS

FIG. 1 is a schematic structural diagram of a communications system according to an embodiment of this application;
FIG. 2 is a schematic flowchart of a communication method in a frequency division duplex system according to an embodiment of this application;
FIG. 3 is a schematic diagram of a transmission frame structure in a frequency division duplex system;
FIG. 4 is a schematic diagram of a delayed virtual transmission frame structure
FIG. 5 is a schematic diagram of comparison between hyperframe structures in two structures;
FIG. 6A is a schematic diagram of system resource usage for a transmission structure;
FIG. 6B is a schematic diagram of system resource usage for a plurality of transmission frame structures;
FIG. 7 is a schematic diagram of comparison between resource usage of terminal devices having different frame structures;
FIG. 8 is a schematic diagram of system resource usage for a plurality of transmission frame structures;
FIG. 9 is a schematic structural diagram of a communications system according to an embodiment of this application;
FIG. 10 is a schematic structural diagram of a terminal device according to an embodiment of this application; and
FIG. 11 is a schematic structural diagram of a network device according to an embodiment of this application.

### DESCRIPTION OF EMBODIMENTS

The technical solutions in the embodiments of this application may be applied to a long term evolution (Long Term Evolution, LTE) architecture, or may be applied to a discrete spectrum aggregation (Discrete Spectrum Aggregation, DSA) system, a universal mobile telecommunications system (Universal Mobile Telecommunications System, UMTS) terrestrial radio access network (UMTS Terrestrial Radio Access Network, UTRAN) architecture, or a global system for mobile communications (Global System for Mobile Communication, GSM)/enhanced data rate for GSM evolution (Enhanced Data Rate for GSM Evolution, EDGE) system radio access network (GSM EDGE Radio Access Network, GERAN) architecture. In the UTRAN architecture or the GERAN architecture, a function of a mobility management entity (Mobility Management Entity, MME) is implemented by a serving general packet radio service (General Packet Radio Service, GPRS) support node (Serving GPRS Support, SGSN), and a function of an SGW\a PGW is implemented by a gateway GPRS support node (Gateway GPRS Support Node, GGSN). The technical solutions in the embodiments of the present invention may be further applied to another communications system, such as a public land mobile network (Public Land Mobile Network, PLMN) system, or even a future 5G communications system or a communications system after 5G. This is not limited in the embodiments of the present invention.

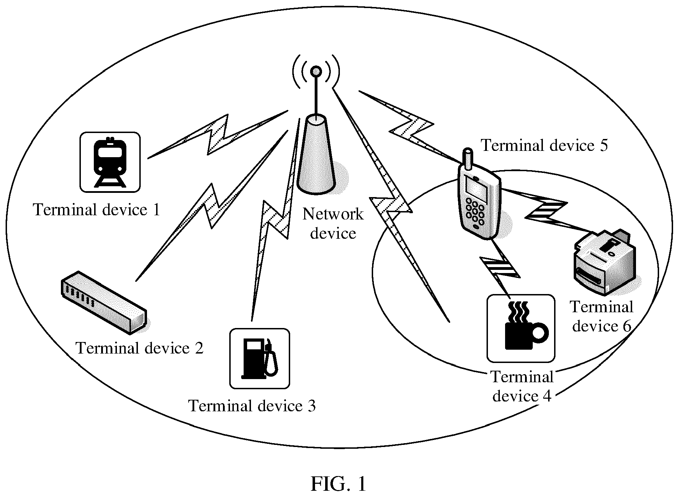

In a specific embodiment, as shown in FIG. 1, a network device and a terminal device 1 to a terminal device 6 form a communications system. In the communications system, the terminal device 1 to the terminal device 6 may send uplink data to a base station. The network device needs to receive the uplink data sent by the terminal device 1 to the terminal device 6. In addition, the terminal devices 4 to the terminal devices 6 may also form a communications system. In the communications system, the network device may send downlink information to the terminal device 1, the terminal device 2, a terminal device, and the like. The terminal device 5 may also send downlink information to the terminal device 4 and the terminal device 6.

The network device may be an entity, on a network side, configured to transmit or receive a signal, for example, a new generation NodeB (new generation Node B, gNodeB). Alternatively, the network device may be a device configured to communicate with a mobile device. The network device may be an access point (Access Point, AP) in a wireless local area network (Wireless LAN, WLAN), a base transceiver station (Base Transceiver Station, BTS) in a global system for mobile communications (Global System for Mobile Communication, GSM) or code division multiple access (Code Division Multiple Access, CDMA), a NodeB (NodeB, NB) in wideband code division multiple access (Wideband Code Division Multiple Access, WCDMA), an evolved NodeB (Evolutional Node B, eNB or eNodeB) in long term evolution (Long Term Evolution, LTE), a relay station, an access point, a vehicle-mounted device, a wearable device, a network device in a future 5G network, a network device in a future evolved public land mobile network (Public Land Mobile Network, PLMN), a gNodeB in an NR system, or the like. In addition, in this embodiment of the present invention, the network device provides a service for a cell, and a terminal device communicates with the network device by using a transmission resource (for example, a frequency domain resource or a spectrum resource) used by the cell. The cell may be a cell corresponding to the network device (for example, a base station), and the cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells feature small coverage and low transmit power, and are applicable to providing a high-speed data transmission service.

The terminal device may be an entity, on a user side, configured to receive or transmit a signal, for example, a new generation user equipment (new generation UE, gUE). The terminal device may also be referred to as a terminal device (User Equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a station (STATION, ST) in a wireless local area network (Wireless Local Area Networks, WLAN), a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device with a wireless communication function, a computing device, another processing device connected to a wireless modem, a vehicle-mounted device, a wearable device, a terminal device in a next generation communications system, for example, a 5th generation (fifth-generation, 5G) communications network, a terminal device in a future evolved public land mobile network (Public Land Mobile Network, PLMN), a terminal device in a new radio (New Radio, NR) communications system, or the like. Through examples but not limitation, in this embodiment of the present invention, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn or integrated into clothes or an accessory of a user. The wearable device is not only a hardware device, but is used to implement powerful functions through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart accessories for monitoring physical signs.

For ease of understanding of this application, related technological knowledge in the embodiments of this application is first described herein.

In a multimedia/multicast broadcast single frequency network (multimedia broadcast single frequency network or multicase broadcast single frequency network, MBSFN), identical waveforms from a plurality of cells need to be transmitted at the same time, so that a UE receiver can consider a plurality of MBSFN cells as a large cell. In addition, the UE not only can avoid inter-cell interference caused by transmission between neighboring cells, but also can benefit from superposition of signals from the plurality of MBSFN cells, and an advanced UE receiver technology such as generalized-rake (generalized-rake, G-RAKE) can resolve a time difference problem in multipath propagation, thereby eliminating intra-cell interference. However, a radio frame is allocated to the MBSFN only when the following formula is met: SFN mod Radio frame allocation period = Radio frame allocation offset, where mod represents a modulo operation, and SFN represents a system frame number. For example, assuming that the radio frame allocation period is 8 and the radio frame allocation offset is 4, subframes with subframe numbers 4, 12, 20, and the like are radio frames that meet the condition and can be allocated to the MBSFN.

It can be learned that, in the MBSFN, cell-level configuration is performed for the UE, and a UE in an FDD cell cannot use different time domain resources on a same carrier. Consequently, radio resources on an FDD carrier cannot be fully utilized. In addition, in the MBSFN, only a downlink resource of the UE is affected, and an uplink resource cannot be configured. During resource configuration, a minimum granularity of the resource configuration is a complete transmission time interval (transmission time interval, TTI). Consequently, a waste of system resources caused when a frame structure (for example, wireless narrowband discrete spectrum aggregation based on long term evolution (eLTE discrete spectrum aggregation, eLTE-DSA)) designed for TDD is directly used in an FDD system cannot be avoided.

In LTE R15, in an EN dual-connectivity (EN Dual-Connectivity, EN-DC) scenario, a subframe offset (offset) may be configured on an FDD component carrier (component carrier, CC). To be specific, different UEs may send uplink data by using different offsets. A specific configuration process may be specifically configured by adding a configuration field. It should be noted that, in LTE R15, the offset configured on the CC is used only for uplink sending of the UE, and it is only considered that sending performed by the UE on the different CCs is staggered in time domain. In addition, an offset applied to sending of the UE is an integer multiple of a TTI. The entire configuration is performed based on uplink power, and is intended to reduce and balance uplink transmit power, but cannot improve FDD spectrum resource utilization when the eLTE-DSA is directly applied to the FDD system.

To resolve the foregoing problem, this application provides a communication method in a frequency division duplex system, a related device, and a system, to avoid a waste of system resources, effectively utilize radio resources in the system, and balance load on different time-frequency resources.

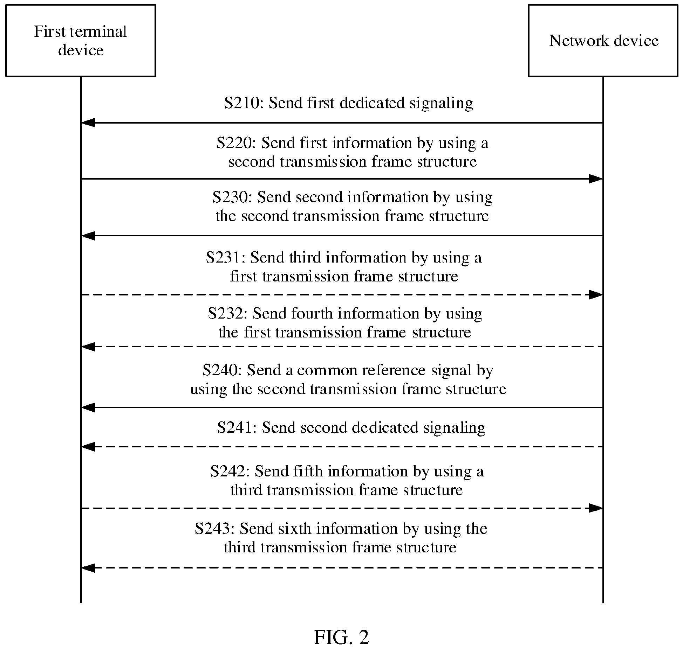

FIG. 2 is a schematic flowchart of a communication method in a frequency division duplex system according to an embodiment of this application. The method includes but is not limited to the following steps.

S210: A network device sends first dedicated signaling to a first terminal device.

Specifically, the first terminal device is a terminal device in a cell managed by the network device.

Further, the network device sends one or any combination of a radio resource control (radio resource control, RRC) establishment message, an RRC reestablishment message, an RRC reconfiguration message, or an RRC resume message to the first terminal device, and adds a configuration field to the one or any combination of the RRC establishment message, the RRC reestablishment message, the RRC reconfiguration message, or the RRC resume message, to enable a function of a delayed virtual frame structure for the first terminal device. In other words, the first terminal device can perform configuration based on the configuration field added by the network device, to obtain the delayed virtual frame structure.

After receiving the one or any combination of the RRC establishment message, the RRC reestablishment message, the RRC reconfiguration message, or the RRC resume message sent by the network device, the first terminal device obtains a first configuration message (namely, the configuration field) from the one or any combination of the RRC establishment message, the RRC reestablishment message, the RRC reconfiguration message, or the RRC resume message, and performs configuration based on the first configuration message, to obtain a second transmission frame structure (namely, the delayed virtual frame structure).

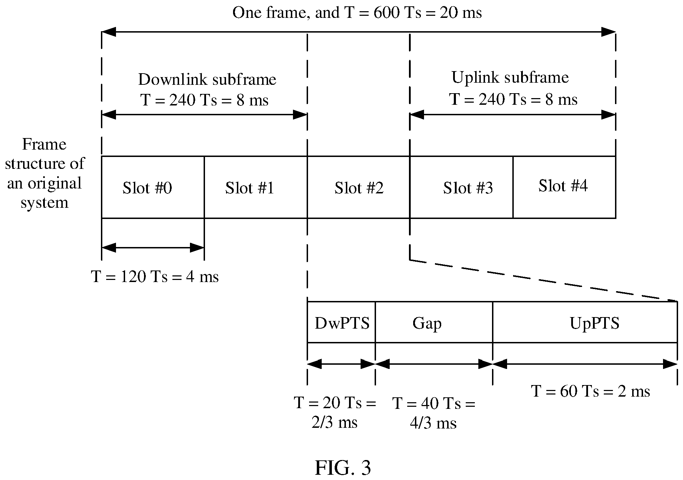

For example, FIG. 3 shows a frame structure eLTE-DSA currently used for a 12.5 kHz carrier. As shown in FIG. 3, one frame is 20 milliseconds and includes 600 collection periods. The frame structure includes five slots (slot), namely, slot #0, slot #1, slot #2, slot #3, and slot #4. Each slot is 4 milliseconds and includes 120 collection periods. Uplink/downlink resources each occupy about 50% of total resources. The first two slots are downlink subframe resources, and the last two slots are uplink subframe resources. In the third slot, a downlink pilot slot (DwPTS) is 2/3 milliseconds, a guard interval (Gap) is 4/3 milliseconds, and an uplink pilot slot (UpPTS) is 2 milliseconds.

It should be noted that, in a current technology, the network device and terminal devices managed by the network device, for example, a base station and all user equipments (user equipment, UE) in a cell managed by the base station, send and receive information by using a same frame structure (for example, the foregoing frame structure). Alternatively, in EN-DC, a terminal device sends uplink information by using two different frame structures.

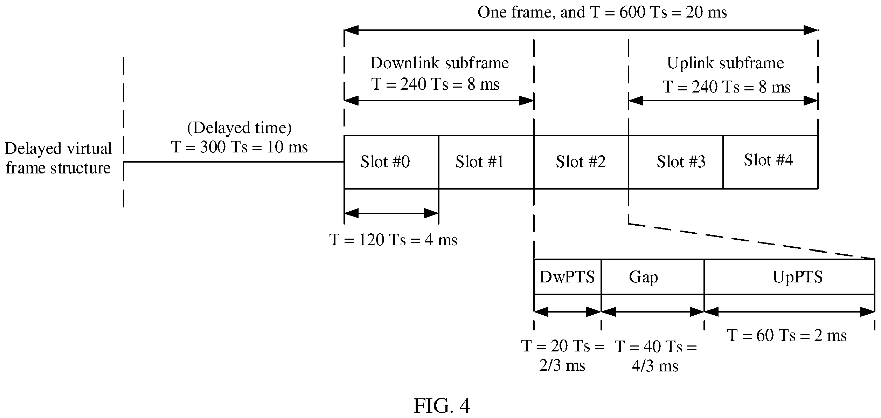

FIG. 4 shows a delayed virtual frame structure obtained through configuration. As shown in FIG. 4, the delayed virtual frame structure has a fixed delay of 10 milliseconds relative to a frame structure of an original system (namely, the frame structure shown in FIG. 3). Other features, such as duration corresponding to the frame structure and included slots, are consistent with the frame structure of the original system and remain unchanged.

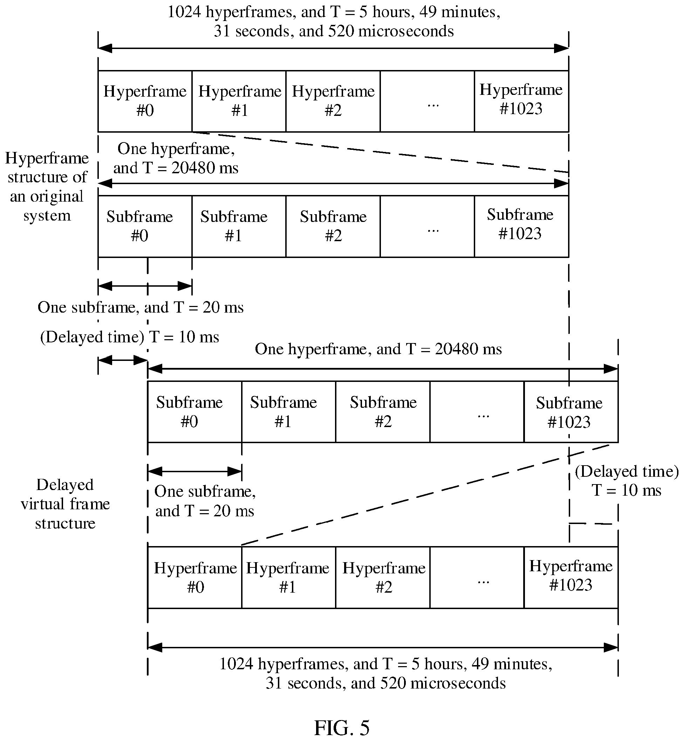

FIG. 5 is a schematic diagram of comparison between hyperframe structures in two frame structures. As shown in FIG. 5, it can be learned that a radio frame corresponding to a frame structure of an original system and a radio frame corresponding to a delayed virtual frame structure that is obtained through configuration and that has a fixed delay of 10 milliseconds have a same radio frame number and a same hyper frame number.

In a specific embodiment of this application, a value of a fixed delay of the frame structure obtained through configuration relative to the frame structure of the original system is less than a transmission time interval (transmission time interval, TTI) of a frequency division duplex system, that is, less than a time length corresponding to the frame structure of the original system.

It may be understood that, in the frame structure, a time domain resource corresponding to a TTI includes both an uplink resource and a downlink resource. In this case, for the frame structures shown in FIG. 3 and FIG. 4, a value of the fixed delay is less than the TTI, so that positions of time domain resources can be effectively staggered, a resource configuration or use manner in the system can be changed. In this way, a waste of system resources can be minimized, and radio resources in the system can be effectively utilized. Certainly, the value of the fixed delay may alternatively not be less than the TTI. The waste of system resources can be reduced provided that it can be ensured that the positions of the time domain resources can be effectively staggered (that is, the value of the fixed delay cannot be an integer multiple of the TTI) and the resource configuration or use manner can be changed.

It should be noted that the foregoing description is provided by using a frame structure in which a time domain resource corresponding to a TTI includes a frame structure of both an uplink resource and a downlink resource as an example. It should be understood that, in some systems, during design of a frame structure, a radio frame corresponding to the frame structure includes a plurality of TTIs (for example, subframes in LTE), and a time domain resource corresponding to each of the plurality of TTIs has only an uplink resource or only a downlink resource. In a system corresponding to the frame structure, when a fixed delay is an integer multiple of a TTI, positions of time domain resources can still be effectively staggered, and a resource configuration or use manner in the system can be changed, so that radio resources in the system can be effectively utilized. Therefore, a value of the fixed delay in a delayed virtual frame structure obtained through configuration may be an integer multiple of the TTI.

S220: The first terminal device sends first information to the network device by using the second transmission frame structure.

Specifically, the network device sends the first dedicated signaling to the first terminal device, so that the first terminal device obtains the second transmission frame structure through configuration. Then, the network device may receive the information that is sent by the first terminal device by using the second transmission frame structure.

In a specific embodiment of this application, the first information includes first data, first control signaling, and/or a first signal.

Specifically, the first data may be data not used in a random access process. The data may be carried on a physical uplink shared channel (physical uplink shared channel, PUSCH). The first control signaling may be control signaling not used in a random access process. The first control signaling may be carried on a physical uplink control channel (physical uplink control channel, PUCCH). The first signal is a physical signal corresponding to a physical channel that carries the first data and/or the first control signaling. The physical signal may be a demodulation reference signal (demodulation reference signal, DMRS), and is used to demodulate the physical channel that carries the first data and/or the first control signaling.

S230: The network device sends second information to the first terminal device by using the second transmission frame structure.

Specifically, the network device sends, by using the second transmission frame structure, information to a terminal device that has the second transmission frame structure obtained through configuration based on the first configuration message.

In a specific embodiment of this application, the second information includes second data, second control signaling, and/or a second signal.

Specifically, the second data may not be a system message, and may be data not used in a random access process. The data may be carried on a physical downlink shared channel (physical downlink shared channel, PDSCH). The second control signaling may be control signaling not used in a random access process, and/or may be control signaling used to feed back an acknowledgement (acknowledgement, ACK)/a negative acknowledgement (negative acknowledgement, NACK) for the first data. The second control signaling may be carried on a physical downlink control channel (physical downlink control channel, PDCCH) or a physical hybrid automatic retransmission indicator channel (physical hybrid ARQ indicator channel, PHICH). The second signal may be a physical signal corresponding to a physical channel that carries the second data and/or the second control signaling. The physical signal may be a cell-specific reference signal (community reference signal, CRS), and is used to demodulate the physical channel that carries the second data and/or the second control signaling.

It can be learned that, for a terminal device having a delayed virtual frame structure, the frame structure is used for both uplink transmission and downlink transmission of the terminal device.

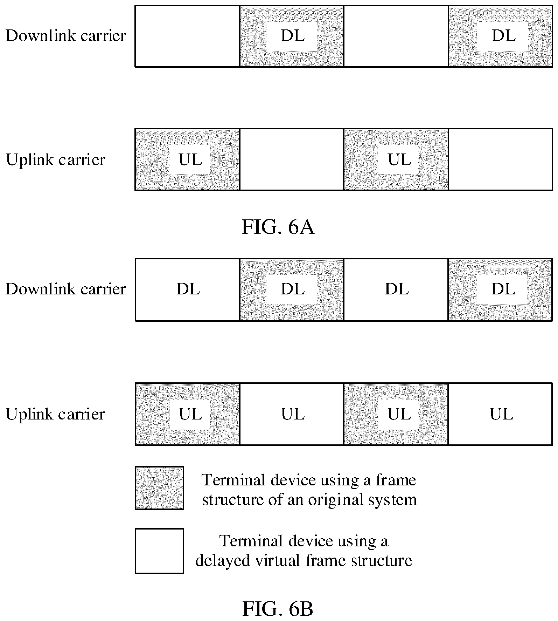

FIG. 6A is a schematic diagram of system resource usage for a transmission frame structure according to an embodiment of this application. As shown in FIG. 6A, there are unutilized resources (namely, resources represented by a blank part) on both a downlink carrier and an uplink carrier, resulting in a serious waste of system resources. FIG. 6B is a schematic diagram of system resource usage for a plurality of transmission frame structures according to an embodiment of this application. As shown in FIG. 6B, a terminal device having a delayed virtual frame structure fully utilizes resources (namely, white padding parts) that are not utilized on an uplink carrier and a downlink carrier, so that usage of resources on the entire uplink carrier and the entire downlink carrier is more balanced.

It may be understood that, for a communications system having the delayed virtual frame structure, when an existing DSA UE resource allocation ratio and an existing frame structure are reused, all wasted resources on the uplink carrier and the downlink carrier can be scheduled, so that radio resources in the system are effectively utilized. In addition, the network device can further configure, in a flexible manner (by sending RRC dedicated signaling to the terminal device), a frame structure used by the terminal device, so that load on different time-frequency resources can be effectively balanced.

Optionally, the method further includes step S231 and step S232.

S231: The first terminal device sends third information to the network device by using a first transmission frame structure.

In a specific embodiment of this application, the third information includes third data, third control signaling, and/or a third signal.

Specifically, the third data may be data used in a random access process. The data may be carried on the PUSCH. The third control signaling may be control signaling used in a random access process. The third control signaling may be carried on the PUCCH. The third signal may be a physical signal corresponding to a physical channel that carries the third data and/or the third control signaling. The physical signal may be a DMRS, and is used to demodulate the physical channel that carries the third data and/or the third control signaling.

S232: The network device sends fourth information to the first terminal device by using the first transmission frame structure.

In a specific embodiment of this application, the fourth information includes fourth data, fourth control signaling, and/or a fourth signal.

Specifically, the fourth data may be a system message, or may be data used in a random access process. The data may be carried on the PDSCH. The fourth control signaling may be control signaling used in a random access process, and/or may be control signaling used to feed back an ACK/a NACK for the third data. The fourth control signaling may be carried on the PDCCH. The fourth signal may be a physical signal corresponding to a physical channel that carries the fourth data and/or the fourth control signaling. The physical signal may be a CRS, and is used to demodulate the physical channel that carries the fourth data and/or the fourth control signaling.

It can be learned that, in data transmission processes corresponding to different procedures, a terminal device having a delayed virtual transmission frame structure does not always transmit data by using the delayed virtual transmission frame structure, but transmits data by using different transmission frame structures.

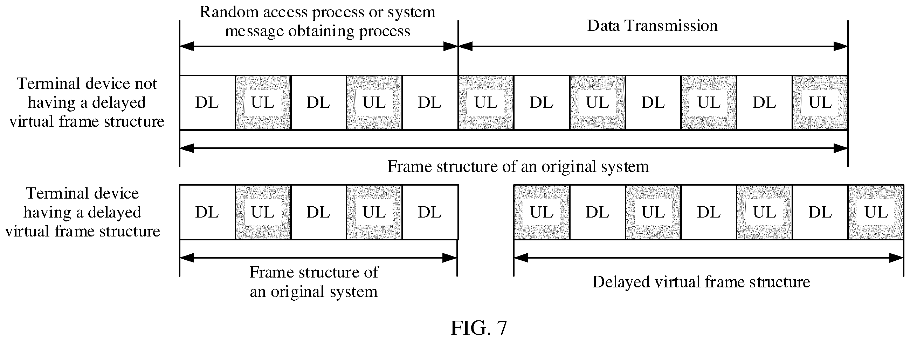

FIG. 7 is a schematic diagram of comparison between resource usage of terminal devices having different frame structures. As shown in FIG. 7, it can be learned that, regardless of a random access process or a system message obtaining process and a data transmission process, a terminal device that does not have a delayed virtual transmission frame structure always transmits information by using a first transmission frame structure (namely, a frame structure of an original system). However, in the random access process or the system message obtaining process, a terminal device having the delayed virtual transmission frame structure transmits information by using the first transmission frame structure. During data transmission, the terminal device having the delayed virtual transmission frame structure transmits information by using a second transmission frame structure (namely, a delayed virtual frame structure).

It may be understood that the terminal device having the delayed virtual frame structure uses the frame structure of the original system in a common channel related process (for example, the random access process and the system message obtaining process), and uses the delayed virtual frame structure in the data transmission process in which a common channel is not used. This effectively reduces a system common resource proportion, and further avoids a waste of resources. In addition, the terminal device can reuse the existing system message obtaining process and the existing random access process, thereby reducing research and development costs.

S240: The network device sends a common reference signal to the first terminal device by using the second transmission frame structure.

Specifically, the network device sends common reference signals (community reference signal, CRS) to different terminal devices by using different transmission frame structures.

It should be noted that, if the network device still sends the CRS by using the frame structure of the original system, for example, the network device sends the CRS by using the frame structure of the original system and the CRS is within the first 10 milliseconds of the radio frame, the terminal device having the delayed virtual transmission frame structure needs to adjust a receiving behavior of the CRS. This increases receiving complexity of the terminal device. If the network device sends the CRS by using the delayed virtual transmission frame structure, the terminal device does not need to intentionally adjust a receiving behavior of the CRS. This does not increase receiving complexity of the terminal device.

Optionally, the method further includes step S241, step S242, and step S243.

S241: The network device sends second dedicated signaling to a third terminal device.

Specifically, the third terminal device is a terminal device in the cell managed by the network device.

Further, the network device sends one or any combination of an RRC establishment message, an RRC reestablishment message, an RRC reconfiguration message, or an RRC resume message to the first terminal device, and adds a configuration field to the one or any combination of the RRC establishment message, the RRC reestablishment message, the RRC reconfiguration message, or the RRC resume message, to enable a function of a delayed virtual frame structure for the third terminal device. In other words, the third terminal device can perform configuration based on the configuration field added by the network device, to obtain the delayed virtual frame structure.

After receiving the one or any combination of the RRC establishment message, the RRC reestablishment message, the RRC reconfiguration message, or the RRC resume message sent by the network device, the third terminal device obtains a second configuration message (namely, the configuration field) from the one or any combination of the RRC establishment message, the RRC reestablishment message, the RRC reconfiguration message, or the RRC resume message, and performs configuration based on the second configuration message, to obtain a third transmission frame structure.

In a specific embodiment of this application, a value of a fixed delay of the frame structure obtained through configuration by using a second message relative to the frame structure of the original system (namely, the first transmission frame structure) is less than a TTI, and is different from the value of the fixed delay of the frame structure obtained through configuration by using the first configuration message.

S242: The third terminal device sends fifth information to the network device by using the third transmission frame structure.

Specifically, the network device sends the second dedicated signaling to the third terminal device, so that the third terminal device obtains the third transmission frame structure through configuration. Then, the network device may receive the information that is sent by the third terminal device by using the third transmission frame structure.

In a specific embodiment of this application, the fifth information includes fifth data, fifth control signaling, and/or a fifth signal.

Specifically, the fifth data may be data not used in a random access process. The data may be carried on the PUSCH. The fifth control signaling may be control signaling not used in a random access process. The fifth control signaling may be carried on the physical uplink control channel PUCCH. The fifth signal is a physical signal corresponding to a physical channel that carries the fifth data and/or the fifth control signaling. The physical signal may be a demodulation reference signal DMRS, and is used to demodulate the physical channel that carries the fifth data and/or the fifth control signaling.

S243: The network device sends sixth information to the third terminal device by using the third transmission frame structure.

Specifically, the network device sends, by using the third transmission frame structure, information to a terminal device that has the third transmission frame structure obtained through configuration based on the second configuration message.

In a specific embodiment of this application, the sixth information includes sixth data, sixth control signaling, and/or a sixth signal.

Specifically, the sixth data may not be a system message, and may be data not used in a random access process. The data may be carried on the PDSCH. The sixth control signaling may be control signaling not used in a random access process, and/or may be control signaling used to feed back an ACK/a NACK for the fifth data. The sixth control signaling may be carried on the PDCCH or the PHICH. The sixth signal may be a physical signal corresponding to a physical channel that carries the sixth data and/or the sixth control signaling. The physical signal may be a CRS, and is used to demodulate the physical channel that carries the sixth data and/or the sixth control signaling.

It can be learned that, for the terminal device having the delayed virtual frame structure, the frame structure is used for both uplink transmission and downlink transmission of the terminal device.

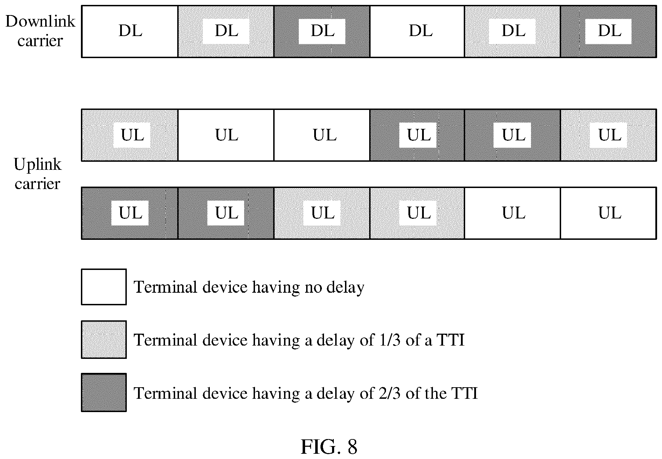

FIG. 8 is a schematic diagram of system resource usage for a plurality of transmission frame structures. As shown in FIG. 8, terminal devices having a plurality of delayed virtual frame structures, for example, a terminal device having a delay of 1/3 of a TTI and a terminal device having a delay of 2/3 of the TTI, fully utilize resources that are not utilized on an uplink carrier and a downlink carrier, so that usage of resources on the entire uplink carrier and the entire downlink carrier is more balanced.

It may be understood that, for a frame structure with asymmetric uplink/downlink resource allocation ratios, different delayed virtual frame structures may be configured for the terminal device, to schedule wasted resources on the uplink and downlink carriers, so that the terminal device can effectively utilize radio resources on an FDD spectrum, and effectively balance load on different time-frequency resources.

It may be understood that the foregoing example is described by using an example in which step S230 (including S231 and S232) and step S240 (including S241, S242, and S243) are performed after step S220. However, during actual application, step S230 and step S240 may be simultaneously performed with step S220, or step S230 and step S240 may be performed before step S220. This is not specifically limited herein.

It should be further understood that step S210 to step S240 in the foregoing method embodiment are merely a schematic summary, and should not constitute a specific limitation. The included steps may be added, reduced, or combined based on a requirement.

The methods in the embodiments of this application are described in detail above. For ease of better implementing the solutions in the embodiments of this application, correspondingly related apparatuses used to cooperate in implementing the solutions are further provided below.

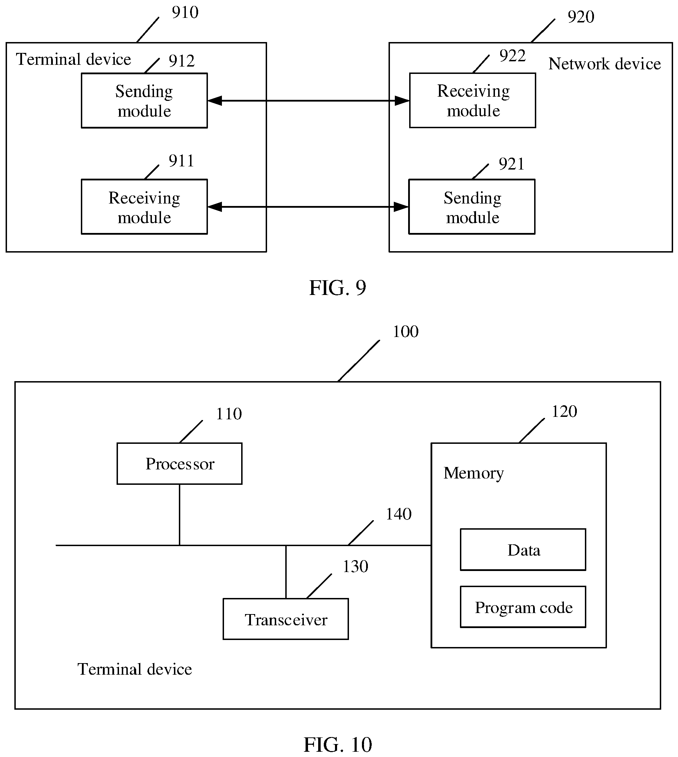

FIG. 9 is a schematic diagram of a communications system according to an embodiment of this application. As shown in FIG. 9, the communications system includes a terminal device 910 and a network device 920.

The terminal device 910 includes at least a receiving module 911 and a sending module 912.

The receiving module 911 is configured to: receive a first dedicated instruction sent by a network device, and obtain a first configuration message.

The sending module 912 is configured to send, based on the first configuration message, first information to the network device by using a second transmission frame structure.

The receiving module 911 is further configured to receive second information that is sent by the network device by using the second transmission frame structure.

In this embodiment of this application, the terminal device 910 performs configuration based on first configuration information received by the receiving module 911, to obtain the second transmission frame structure having a first fixed delay. The sending module 912 sends the first information to the network device by using the second transmission frame structure, or the receiving module 911 receives the second information that is sent by the network device by using the second transmission frame structure. In this way, radio resources in the system can be fully utilized, load on different time-frequency resources can be balanced, and a same terminal device can be reused, thereby reducing research and development costs.

In an embodiment, the first information includes first data, first control signaling, and/or a first signal; and the second information includes second data, second control signaling, and/or a second signal.

In an embodiment, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

In an embodiment, a value of the first fixed delay is less than a TTI.

In an embodiment, the sending module 912 is further configured to send third information to the network device by using the first transmission frame structure. The receiving module 911 is further configured to receive fourth information that is sent by the network device by using the first transmission frame structure. The third information includes third data, third control signaling, and/or a third signal, the third data is data used in a random access process, the third control signaling is control signaling used in a random access process, and the third signal is a physical signal corresponding to a physical channel that carries the third data and/or the third control signaling. The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

In an embodiment, the first dedicated signaling includes at least one of the following messages: a radio resource control RRC establishment message, an RRC reestablishment message, an RRC reconfiguration message, or an RRC resume message.

It should be understood that the sending module 912 and the receiving module 911 in this embodiment of this application may be implemented by a transceiver or a transceiver-related circuit component.

The network device 920 includes at least a sending module 921 and a receiving module 922.

The sending module 921 is configured to send first dedicated signaling to a first terminal device, where the first dedicated signaling carries a first configuration message.

The receiving module 922 is configured to receive first information that is sent by the first terminal device based on the first configuration message by using a second transmission frame structure.

The sending module 921 is further configured to send second information to the first device by using the second transmission frame structure.

In an embodiment, the first information includes first data, first control signaling, and/or a first signal; and the second information includes second data, second control signaling, and/or a second signal.

In an embodiment, the first data is data not used in a random access process, the first control signaling is control signaling not used in a random access process, and the first signal is a physical signal corresponding to a physical channel that carries the first data and/or the first control signaling; and the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

In an embodiment, a value of the first fixed delay is less than a TTI.

In an embodiment, the receiving module 922 is further configured to receive third information that is sent by the first terminal device by using the first transmission frame structure. The sending module 921 is further configured to send fourth information to the first terminal device by using the first transmission frame structure. The third information includes third data, third control signaling, and/or a third signal, the third data is data used in a random access process, the third control signaling is control signaling used in a random access process, and the third signal is a physical signal corresponding to a physical channel that carries the third data and/or the third control signaling. The fourth information includes fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

In an embodiment, the sending module 921 is further configured to send a common reference signal CRS to the first terminal device by using the second transmission frame structure.

In an embodiment, the sending module is further configured to send second dedicated signaling to a third terminal device, where the second dedicated signaling carries a second configuration message. The receiving module 922 is further configured to receive fifth information that is sent by the third terminal device based on the second configuration message by using a third transmission frame structure. The sending module 921 is further configured to send sixth information to the third terminal device by using the third transmission frame structure.

In an embodiment, the first dedicated signaling and/or the second dedicated signaling include/includes at least one of the following messages: a radio resource control RRC establishment message, an RRC reestablishment message, an RRC reconfiguration message, or an RRC resume message.

It should be understood that the sending module 921 and the receiving module 922 in this embodiment of this application may be implemented by a transceiver or a transceiver-related circuit component.

It should be noted that a structure of the terminal device or the network device and a message transmission process are merely used as examples, and should not constitute a specific limitation. Units in the terminal device or the network device may be added, removed, or combined based on a requirement.

FIG. 10 is a schematic structural diagram of a terminal device according to an embodiment of this application. The terminal device 100 includes at least a processor 110, a memory 120, and a transceiver 130. The processor 110, the memory 120, and the transceiver 130 are connected by using a bus 140. The memory 120 stores instructions or programs. The processor 110 is configured to execute the instructions or the programs stored in the memory 120. When the instructions or programs stored in the memory 120 are executed, the transceiver 130 is configured to perform the operations performed by the receiving module 911 and the sending module 912 in the foregoing embodiment.

It should be noted that the terminal device 910 or the terminal device 100 in the embodiments of this application may correspond to the first terminal device in the method embodiments provided in this application, and operations and/or functions of the modules in the terminal device 910 or the terminal device 100 are separately used to implement corresponding procedures of the methods in FIG. 1 to FIG. 8. For brevity, details are not described herein again.

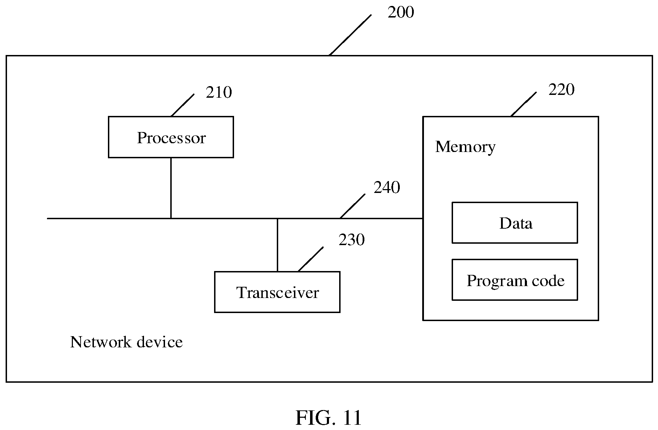

FIG. 11 is a schematic structural diagram of a network device according to an embodiment of this application. The network device 200 includes at least a processor 210, a memory 220, and a transceiver 230. The processor 210, the memory 220, and the transceiver 230 are connected by using a bus 240. The memory 220 stores instructions or programs. The processor 210 is configured to execute the instructions or the programs stored in the memory 220. When the instructions or programs stored in the memory 220 are executed, the transceiver 230 is configured to perform the operations performed by the sending module 921 and the receiving module 922 in the foregoing embodiment.

It should be noted that the network device 920 or the network device 200 in the embodiments of this application may correspond to the network device in the method embodiments provided in this application, and operations and/or functions of the modules in the network device 910 or the network device 200 are separately used to implement corresponding procedures of the methods in FIG. 1 to FIG. 8. For brevity, details are not described herein again.

An embodiment of this application further provides a computer-readable storage medium. The computer-readable storage medium stores a computer program. When the program is executed by a processor, a procedure related to the first terminal device or the network device in the communication method in the frequency division duplex system provided in the foregoing method embodiments may be implemented.

An embodiment of this application further provides a computer program product. When the computer program product is run on a computer or a processor, the computer or the processor is enabled to perform one or more steps in any one of the foregoing message transmission methods. When component modules of the device are implemented in a form of a software functional unit and sold or used as an independent product, the component modules may be stored in a computer-readable storage medium.

It should be understood that, the processor mentioned in this embodiment of this application may be a central processing unit (Central Processing Unit, CPU), another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or a transistor logical device, a discrete hardware component, or the like. The general-purpose processor may be a microprocessor, or the processor may be any conventional processor, or the like.

It may be understood that the memory mentioned in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through examples but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but is not limited to these memories and any memory of another proper type.

It should further be understood that "first", "second", "third", "fourth", and various numbers in this specification are merely used for differentiation for ease of description, and are not construed as a limitation to the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

Persons of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

Persons skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps in the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method in a frequency division duplex system, comprising:
receiving (S210), by a first terminal device, first dedicated signaling sent by a network device, and obtaining a first configuration message; and
sending (S220), based on the first configuration message, first information to the network device by using a second transmission frame structure, and receiving (S230) second information that is sent by the network device by using the second transmission frame structure, wherein
the second transmission frame structure has a first fixed delay relative to a first transmission frame structure, and the first transmission frame structure is a frame structure that is used by a second terminal device to send third information to the network device and that is used by the network device to send fourth information to the second terminal device.

2. The method according to claim 1, wherein the first information comprises first data, first control signaling, and/or a first signal; and
the second information comprises second data, second control signaling, and/or a second signal.

3. The method according to claim 2, wherein
the first data is data not used in a random access process, the first control signaling is control signaling not used in a random access process, and the first signal is a physical signal corresponding to a physical channel that carries the first data and/or the first control signaling; and
the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

4. The method according to any one of claims 1 to 3, wherein a value of the first fixed delay is less than a transmission time interval TTI of the frequency division duplex system.

5. The method according to any one of claims 1 to 4, wherein the method further comprises:
sending (S231) the third information to the network device by using the first transmission frame structure and receiving (S232) the fourth information that is sent by the network device by using the first transmission frame structure, wherein
the third information comprises third data, third control signaling, and/or a third signal, the third data is data used in a random access process, the third control signaling is control signaling used in a random access process, and the third signal is a physical signal corresponding to a physical channel that carries the third data and/or the third control signaling; and
the fourth information comprises fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

6. A communication method in a frequency division duplex system, comprising:
sending (S210) first dedicated signaling to a first terminal device, wherein the first dedicated signaling carries a first configuration message; and
receiving (S220) first information that is sent by the first terminal device based on the first configuration message by using a second transmission frame structure, and sending (S230) second information to the first terminal device by using the second transmission frame structure, wherein
the second transmission frame structure has a first fixed delay relative to a first transmission frame structure, and the first transmission frame structure is a frame structure that is used by a second terminal device to send third information to the network device and that is used by the network device to send fourth information to the second terminal device.

7. The method according to claim 6, wherein the first information comprises first data, first control signaling, and/or a first signal; and
the second information comprises second data, second control signaling, and/or a second signal.

8. The method according to claim 7, wherein
the first data is data not used in a random access process, the first control signaling is control signaling not used in a random access process, and the first signal is a physical signal corresponding to a physical channel that carries the first data and/or the first control signaling; and
the second data is not a system message and is data not used in a random access process, the second control signaling is control signaling not used in a random access process and/or is control signaling used to feed back an acknowledgement ACK/a negative acknowledgement NACK for the first data, and the second signal is a physical signal corresponding to a physical channel that carries the second data and/or the second control signaling.

9. The method according to any one of claims 6 to 8, wherein a value of the first fixed delay is less than a TTI.

10. The method according to any one of claims 6 to 9, wherein the method further comprises:
receiving (S231) the third information that is sent by the first terminal device by using the first transmission frame structure, and sending (S232) the fourth information to the first terminal device by using the first transmission frame structure, wherein
the third information comprises third data, third control signaling, and/or a third signal, the third data is data used in a random access process, the third control signaling is control signaling used in a random access process, and the third signal is a physical signal corresponding to a physical channel that carries the third data and/or the third control signaling; and
the fourth information comprises fourth data, fourth control signaling, and/or a fourth signal, the fourth data is a system message or is data used in a random access process, the fourth control signaling is control signaling used in a random access process and/or is control signaling used to feed back an ACK/a NACK for the third data, and the fourth signal is a physical signal corresponding to a physical channel that carries the fourth data and/or the fourth control signaling.

11. The method according to any one of claims 1 to 10, wherein the first dedicated signaling and/or the second dedicated signaling comprise/comprises at least one of the following messages:
a radio resource control RRC establishment message, an RRC reestablishment message, an RRC reconfiguration message, or an RRC resume message.

12. A first terminal device (100), comprising a processor (110), a memory (120), and a transceiver (130), wherein
the processor (110), the memory (120), and the transceiver (130) are connected to each other, the memory (120) is configured to store a computer program, the computer program comprises program instructions, and the processor (110) is configured to invoke the program instructions to perform the message transmission method in the frequency division duplex system according to any one of claims 1 to 5.

13. A network device (200), comprising a processor (210), a memory (220), and a transceiver (230), wherein
the processor (210), the memory (220), and the transceiver (230) are connected to each other, the memory (220) is configured to store a computer program, the computer program comprises program instructions, and the processor (210) is configured to invoke the program instructions to perform the message transmission method in the frequency division duplex system according to any one of claims 6 to 11.

14. A computer non-transient storage medium, comprising instructions, wherein when the instructions are run on a terminal device, the terminal device is enabled to perform the method according to any one of claims 1 to 11.

## Patentansprüche

1. Kommunikationsverfahren in einem Frequenzduplexsystem, das Folgendes umfasst:
Empfangen (S210), durch ein erstes Endgerät, einer ersten dedizierten Signalisierung, die von einem Netzwerkgerät gesendet wird, und Erhalten einer ersten Konfigurationsnachricht; und
Senden (S220), basierend auf der ersten Konfigurationsnachricht, einer ersten Information an das Netzwerkgerät unter Verwendung einer zweiten Übertragungsrahmenstruktur, und Empfangen (S230) einer zweiten Information, die von dem Netzwerkgerät unter Verwendung der zweiten Übertragungsrahmenstruktur gesendet wird, wobei
die zweite Übertragungsrahmenstruktur eine erste feste Verzögerung relativ zu einer ersten Übertragungsrahmenstruktur aufweist und die erste Übertragungsrahmenstruktur eine Rahmenstruktur ist, die von einem zweiten Endgerät verwendet wird, um eine dritte Information an das Netzwerkgerät zu senden, und die von dem Netzwerkgerät verwendet wird, um eine vierte Information an das zweite Endgerät zu senden.

2. Verfahren nach Anspruch 1, wobei
die erste Information erste Daten, eine erste Steuerungssignalisierung und/oder ein erstes Signal umfasst; und
die zweite Information zweite Daten, eine zweite Steuerungssignalisierung und/oder ein zweites Signal umfasst.

3. Verfahren nach Anspruch 2, wobei
die ersten Daten Daten sind, die nicht in einem Direktzugriffsprozess verwendet werden, die erste Steuerungssignalisierung eine Steuerungssignalisierung ist, die nicht in einem Direktzugriffsprozess verwendet wird, und das erste Signal ein physikalisches Signal ist, das einem physikalischen Kanal entspricht, der die ersten Daten und/oder die erste Steuerungssignalisierung trägt; und
die zweiten Daten keine Systemnachricht sind und Daten sind, die nicht in einem Direktzugriffsprozess verwendet werden, die zweite Steuerungssignalisierung eine Steuerungssignalisierung ist, die nicht in einem Direktzugriffsprozess verwendet wird, und/oder eine Steuerungssignalisierung ist, die verwendet wird, um eine Bestätigung (ACK)/eine negative Bestätigung (NACK) für die ersten Daten zurückzumelden, und das zweite Signal ein physikalisches Signal ist, das einem physikalischen Kanal entspricht, der die zweiten Daten und/oder die zweite Steuerungssignalisierung trägt.

4. Verfahren nach einem der Ansprüche 1 bis 3, wobei ein Wert der ersten festen Verzögerung kleiner ist als ein Übertragungszeitintervall (TTI) des Frequenzduplexsystems.

5. Verfahren nach einem der Ansprüche 1 bis 4, wobei das Verfahren ferner Folgendes umfasst:
Senden (S231) der dritten Information an das Netzwerkgerät unter Verwendung der ersten Übertragungsrahmenstruktur, und Empfangen (S232) der vierten Information, die von dem Netzwerkgerät unter Verwendung der ersten Übertragungsrahmenstruktur gesendet wird, wobei
die dritte Information dritte Daten, eine dritte Steuerungssignalisierung und/oder ein drittes Signal umfasst, die dritten Daten Daten sind, die in einem Direktzugriffsprozess verwendet werden, die dritte Steuerungssignalisierung eine Steuerungssignalisierung ist, die in einem Direktzugriffsprozess verwendet wird, und das dritte Signal ein physikalisches Signal ist, das einem physikalischen Kanal entspricht, der die dritten Daten und/oder die dritte Steuerungssignalisierung trägt; und
die vierte Information vierte Daten, eine vierte Steuerungssignalisierung und/oder ein viertes Signal umfasst, die vierten Daten eine Systemnachricht sind oder Daten sind, die in einem Direktzugriffsprozess verwendet werden, die vierte Steuerungssignalisierung eine Steuerungssignalisierung ist, die in einem Direktzugriffsprozess verwendet wird, und/oder eine Steuerungssignalisierung ist, die verwendet wird, um eine ACK/eine NACK für die dritten Daten zurückzumelden, und das vierte Signal ein physikalisches Signal ist, das einem physikalischen Kanal entspricht, der die vierten Daten und/oder die vierte Steuerungssignalisierung trägt.

6. Kommunikationsverfahren in einem Frequenzduplexsystem, das Folgendes umfasst:
Senden (S210) einer ersten dedizierten Signalisierung an ein erstes Endgerät, wobei die erste dedizierte Signalisierung eine erste Konfigurationsnachricht trägt; und
Empfangen (S220) einer ersten Information, die von dem ersten Endgerät basierend auf der ersten Konfigurationsnachricht gesendet wird, unter Verwendung einer zweiten Übertragungsrahmenstruktur, und Senden (S230) einer zweiten Information an das erste Endgerät unter Verwendung der zweiten Übertragungsrahmenstruktur, wobei
die zweite Übertragungsrahmenstruktur eine erste feste Verzögerung relativ zu einer ersten Übertragungsrahmenstruktur aufweist und die erste Übertragungsrahmenstruktur eine Rahmenstruktur ist, die von einem zweiten Endgerät verwendet wird, um eine dritte Information an das Netzwerkgerät zu senden, und die von dem Netzwerkgerät verwendet wird, um eine vierte Information an das zweite Endgerät zu senden.

7. Verfahren nach Anspruch 6, wobei
die erste Information erste Daten, eine erste Steuerungssignalisierung und/oder ein erstes Signal umfasst; und
die zweite Information zweite Daten, eine zweite Steuerungssignalisierung und/oder ein zweites Signal umfasst.

8. Verfahren nach Anspruch 7, wobei
die ersten Daten Daten sind, die nicht in einem Direktzugriffsprozess verwendet werden, die erste Steuerungssignalisierung eine Steuerungssignalisierung ist, die nicht in einem Direktzugriffsprozess verwendet wird, und das erste Signal ein physikalisches Signal ist, das einem physikalischen Kanal entspricht, der die ersten Daten und/oder die erste Steuerungssignalisierung trägt; und
die zweiten Daten keine Systemnachricht sind und Daten sind, die nicht in einem Direktzugriffsprozess verwendet werden, die zweite Steuerungssignalisierung eine Steuerungssignalisierung ist, die nicht in einem Direktzugriffsprozess verwendet wird, und/oder eine Steuerungssignalisierung ist, die verwendet wird, um eine Bestätigung (ACK)/eine negative Bestätigung (NACK) für die ersten Daten zurückzumelden, und das zweite Signal ein physikalisches Signal ist, das einem physikalischen Kanal entspricht, der die zweiten Daten und/oder die zweite Steuerungssignalisierung trägt.

9. Verfahren nach einem der Ansprüche 6 bis 8,
wobei ein Wert der ersten festen Verzögerung kleiner als ein TTI ist.

10. Verfahren nach einem der Ansprüche 6 bis 9, wobei das Verfahren ferner Folgendes umfasst:
Empfangen (S231) der dritten Information, die von dem ersten Endgerät unter Verwendung der ersten Übertragungsrahmenstruktur gesendet wird, und Senden (S232) der vierten Information an das erste Endgerät unter Verwendung der ersten Übertragungsrahmenstruktur, wobei
die dritte Information dritte Daten, eine dritte Steuerungssignalisierung und/oder ein drittes Signal umfasst, die dritten Daten Daten sind, die in einem Direktzugriffsprozess verwendet werden, die dritte Steuerungssignalisierung eine Steuerungssignalisierung ist, die in einem Direktzugriffsprozess verwendet wird, und das dritte Signal ein physikalisches Signal ist, das einem physikalischen Kanal entspricht, der die dritten Daten und/oder die dritte Steuerungssignalisierung trägt; und
die vierte Information vierte Daten, eine vierte Steuerungssignalisierung und/oder ein viertes Signal umfasst, die vierten Daten eine Systemnachricht sind oder Daten sind, die in einem Direktzugriffsprozess verwendet werden, die vierte Steuerungssignalisierung eine Steuerungssignalisierung ist, die in einem Direktzugriffsprozess verwendet wird, und/oder eine Steuerungssignalisierung ist, die verwendet wird, um eine ACK/eine NACK für die dritten Daten zurückzumelden, und das vierte Signal ein physikalisches Signal ist, das einem physikalischen Kanal entspricht, der die vierten Daten und/oder die vierte Steuerungssignalisierung trägt.

11. Verfahren nach einem der Ansprüche 1 bis 10, wobei die erste dedizierte Signalisierung und/oder die zweite dedizierte Signalisierung mindestens eine der folgenden Nachrichten umfasst/umfassen:
eine Funkressourcensteuerungs-(RRC)-Einrichtungsnachricht, eine RRC-Wiederherstellungsnachricht, eine RRC-Rekonfigurationsnachricht oder eine RRC-Fortsetzungsnachricht.

12. Erstes Endgerät (100), das einen Prozessor (110), einen Speicher (120) und einen Transceiver (130) umfasst, wobei
der Prozessor (110), der Speicher (120) und der Transceiver (130) miteinander verbunden sind, der Speicher (120) so konfiguriert ist, dass er ein Computerprogramm speichert, das Computerprogramm Programmanweisungen umfasst und der Prozessor (110) so konfiguriert ist, dass er die Programmanweisungen aufruft, um das Nachrichtenübertragungsverfahren in dem Frequenzduplexsystem nach einem der Ansprüche 1 bis 5 durchzuführen.

13. Netzwerkgerät (200), das einen Prozessor (210), einen Speicher (220) und einen Transceiver (230) umfasst, wobei
der Prozessor (210), der Speicher (220) und der Transceiver (230) miteinander verbunden sind, der Speicher (220) so konfiguriert ist, dass er ein Computerprogramm speichert, das Computerprogramm Programmanweisungen umfasst und der Prozessor (210) so konfiguriert ist, dass er die Programmanweisungen aufruft, um das Nachrichtenübertragungsverfahren in dem Frequenzduplexsystem nach einem der Ansprüche 6 bis 11 durchzuführen.

14. Nicht flüchtiges Computerspeichermedium, das Anweisungen enthält, wobei, wenn die Anweisungen auf einem Endgerät ausgeführt werden, das Endgerät in die Lage versetzt wird, das Verfahren nach einem der Ansprüche 1 bis 11 durchzuführen.

## Revendications

1. Procédé de communication dans un système de duplexage par répartition en fréquence, comprenant :
la réception (S210), par un premier dispositif terminal, d'une première signalisation dédiée envoyée par un dispositif de réseau, et l'obtention d'un premier message de configuration ; et
l'envoi (S220), sur la base du premier message de configuration, de premières informations au dispositif de réseau au moyen d'une seconde structure de trame de transmission, et la réception (S230) de deuxièmes informations qui sont envoyées par le dispositif de réseau au moyen de la seconde structure de trame de transmission, dans lequel
la seconde structure de trame de transmission a un premier délai fixe par rapport à une première structure de trame de transmission, et la première structure de trame de transmission est une structure de trame qui est utilisée par un second dispositif terminal pour envoyer des troisièmes informations au dispositif de réseau et qui est utilisée par le dispositif de réseau pour envoyer des quatrièmes informations au second dispositif terminal.

2. Procédé selon la revendication 1, dans lequel les premières informations comprennent des premières données, une première signalisation de commande, et/ou un premier signal ; et
les deuxièmes informations comprennent des deuxièmes données, une deuxième signalisation de commande, et/ou un deuxième signal.

3. Procédé selon la revendication 2, dans lequel
les premières données sont des données non utilisées lors d'un processus d'accès aléatoire, la première signalisation de commande est une signalisation de commande non utilisée lors d'un processus d'accès aléatoire, et le premier signal est un signal physique correspondant à un canal physique qui transporte les premières données et/ou la première signalisation de commande ; et
les deuxièmes données ne sont pas un message système et sont des données non utilisées lors d'un processus d'accès aléatoire, la deuxième signalisation de commande est une signalisation de commande non utilisée lors d'un processus d'accès aléatoire et/ou est une signalisation de commande utilisée pour retourner un accusé de réception ACK/un accusé de réception négatif NACK pour les premières données, et le deuxième signal est un signal physique correspondant à un canal physique qui transporte les deuxièmes données et/ou la deuxième signalisation de commande.

4. Procédé selon l'une quelconque des revendications 1 à 3, dans lequel une valeur du premier délai fixe est inférieure à un intervalle de temps de transmission TTI du système de duplexage par répartition en fréquence.

5. Procédé selon l'une quelconque des revendications 1 à 4, dans lequel le procédé comprend en outre :
l'envoi (S231) des troisièmes informations au dispositif de réseau au moyen de la première structure de trame de transmission et la réception (S232) des quatrièmes informations qui sont envoyées par le dispositif de réseau au moyen de la première structure de trame de transmission, dans lequel
les troisièmes informations comprennent des troisièmes données, une troisième signalisation de commande, et/ou un troisième signal, les troisièmes données sont des données utilisées lors d'un processus d'accès aléatoire, la troisième signalisation de commande est une signalisation de commande utilisée lors d'un processus d'accès aléatoire, et le troisième signal est un signal physique correspondant à un canal physique qui transporte les troisièmes données et/ou la troisième signalisation de commande ; et
les quatrièmes informations comprennent des quatrièmes données, une quatrième signalisation de commande, et/ou un quatrième signal, les quatrièmes données sont un message système ou sont des données utilisées lors d'un processus d'accès aléatoire, la quatrième signalisation de commande est une signalisation de commande utilisée lors d'un processus d'accès aléatoire et/ou est une signalisation de commande utilisée pour retourner un ACK/un NACK pour les troisièmes données, et le quatrième signal est un signal physique correspondant à un canal physique qui transporte les quatrièmes données et/ou la quatrième signalisation de commande.

6. Procédé de communication dans un système de duplexage par répartition en fréquence, comprenant :
l'envoi (S210) d'une première signalisation dédiée à un premier dispositif terminal, dans lequel la première signalisation dédiée transporte un premier message de configuration ; et
la réception (S220) de premières informations qui sont envoyées par le premier dispositif terminal sur la base du premier message de configuration au moyen d'une seconde structure de trame de transmission, et l'envoi (S230) de deuxièmes informations au premier dispositif terminal au moyen de la seconde structure de trame de transmission, dans lequel
la seconde structure de trame de transmission a un premier délai fixe par rapport à une première structure de trame de transmission, et la première structure de trame de transmission est une structure de trame qui est utilisée par un second dispositif terminal pour envoyer des troisièmes informations au dispositif de réseau et qui est utilisée par le dispositif de réseau pour envoyer des quatrièmes informations au second dispositif terminal.

7. Procédé selon la revendication 6, dans lequel les premières informations comprennent des premières données, une première signalisation de commande, et/ou un premier signal ; et
les deuxièmes informations comprennent des deuxièmes données, une deuxième signalisation de commande, et/ou un deuxième signal.

8. Procédé selon la revendication 7, dans lequel
les premières données sont des données non utilisées lors d'un processus d'accès aléatoire, la première signalisation de commande est une signalisation de commande non utilisée lors d'un processus d'accès aléatoire, et le premier signal est un signal physique correspondant à un canal physique qui transporte les premières données et/ou la première signalisation de commande ; et
les deuxièmes données ne sont pas un message système et sont des données non utilisées lors d'un processus d'accès aléatoire, la deuxième signalisation de commande est une signalisation de commande non utilisée lors d'un processus d'accès aléatoire et/ou est une signalisation de commande utilisée pour retourner un accusé de réception ACK/un accusé de réception négatif NACK pour les premières données, et le deuxième signal est un signal physique correspondant à un canal physique qui transporte les deuxièmes données et/ou la deuxième signalisation de commande.

9. Procédé selon l'une quelconque des revendications 6 à 8, dans lequel une valeur du premier délai fixe est inférieure à un TTI.

10. Procédé selon l'une quelconque des revendications 6 à 9, dans lequel le procédé comprend en outre :
la réception (S231) des troisièmes informations qui sont envoyées par le premier dispositif terminal au moyen de la première structure de trame de transmission, et l'envoi (S232) des quatrièmes informations au premier dispositif terminal au moyen de la première structure de trame de transmission, dans lequel
les troisièmes informations comprennent des troisièmes données, une troisième signalisation de commande, et/ou un troisième signal, les troisièmes données sont des données utilisées lors d'un processus d'accès aléatoire, la troisième signalisation de commande est une signalisation de commande utilisée lors d'un processus d'accès aléatoire, et le troisième signal est un signal physique correspondant à un canal physique qui transporte les troisièmes données et/ou la troisième signalisation de commande ; et
les quatrièmes informations comprennent des quatrièmes données, une quatrième signalisation de commande, et/ou un quatrième signal, les quatrièmes données sont un message système ou sont des données utilisées lors d'un processus d'accès aléatoire, la quatrième signalisation de commande est une signalisation de commande utilisée lors d'un processus d'accès aléatoire et/ou est une signalisation de commande utilisée pour retourner un ACK/un NACK pour les troisièmes données, et le quatrième signal est un signal physique correspondant à un canal physique qui transporte les quatrièmes données et/ou la quatrième signalisation de commande.

11. Procédé selon l'une quelconque des revendications 1 à 10, dans lequel la première signalisation dédiée et/ou la seconde signalisation dédiée comprend/comprennent au moins l'un des messages suivants :
un message d'établissement de commande de ressource radio RRC, un message de rétablissement de RRC, un message de reconfiguration de RRC, ou un message de reprise de RRC.

12. Premier dispositif terminal (100), comprenant un processeur (110), une mémoire (120), et un émetteur-récepteur (130), dans lequel le processeur (110), la mémoire (120) et l'émetteur-récepteur (130) sont connectés les uns aux autres, la mémoire (120) est configurée pour stocker un programme informatique, le programme informatique comprenant des instructions de programme, et le processeur (110) est configuré pour appeler les instructions de programme pour exécuter le procédé de transmission de message dans le système de duplexage par répartition en fréquence selon l'une quelconque des revendications 1 à 5.

13. Dispositif de réseau (200), comprenant un processeur (210), une mémoire (220), et un émetteur-récepteur (230), dans lequel le processeur (210), la mémoire (220) et l'émetteur-récepteur (230) sont connectés les uns aux autres, la mémoire (220) est configurée pour stocker un programme informatique, le programme informatique comprenant des instructions de programme, et le processeur (210) est configuré pour appeler les instructions de programme pour exécuter le procédé de transmission de message dans le système de duplexage par répartition en fréquence selon l'une quelconque des revendications 6 à 11.

14. Support de stockage informatique non transitoire, comprenant des instructions, dans lequel lorsque les instructions sont exécutées sur un dispositif terminal, le dispositif terminal est amené à exécuter le procédé selon l'une quelconque des revendications 1 à 11.
